# EUROPÄISCHE PATENTSCHRIFT

(11) **EP 4 486 568 B1**
(45) Veröffentlichungstag und Bekanntmachung des Hinweises auf die Patenterteilung: **02.12.2026**
(21) Anmeldenummer: 23710256.1
(22) Anmeldetag: 03.03.2023
(51) Int. Cl.: H01F 41/02, H02K 15/02, B21D 28/22, B21D 43/22, B32B 37/26

(54) **VERFAHREN ZUM VERBINDEN VON BLECHTEILEN ZU BLECHPAKETEN UND VORRICHTUNG ZUR DESSEN DURCHFÜHRUNG**
METHOD FOR CONNECTING SHEET METAL TO STACKS OF METAL SHEETS AND DEVICE FOR CARRYING OUT SAID METHOD
PROCÉDÉ DE LIAISON DE PIÈCES DE TÔLE À DES PAQUETS DE TÔLES ET DISPOSITIF POUR SA MISE EN OEUVRE

(30) Priorität: 04.03.2022 EP 22160359
(43) Veröffentlichungstag der Anmeldung: 08.01.2025
(73) Patentinhaber: voestalpine Automotive Components Dettingen GmbH & Co. KG, 72581 Dettingen an der Erms (DE)
(72) Erfinder: BURSY, Heinrich, 73268 Erkenbrechtsweiler (DE)
(74) Vertreter: Jell, Friedrich
(86) Internationale Anmeldenummer: PCT/EP2023/055502
(87) Internationale Veröffentlichungsnummer: WO 2023/166208

(56) Entgegenhaltungen:
- EP-A1- 3 089 335
- EP-A1- 3 316 457

## Beschreibung

### Technisches Gebiet

Die Erfindung betrifft ein Verfahren zum Verbinden von Blechteilen zu Blechpaketen und eine Vorrichtung zur Durchführung des Verfahrens.

### Stand der Technik

Um die Trennung von gestapelten Blechteilen in Blechpakete zu erleichtern, ist es bekannt, jeweils zwischen zwei Blechteilen Trennelemente vorzusehen. Diese Trennelemente weisen einen flachen Träger mit einer Klebstoffbeschichtung einerseits und mit einer Antihaftbeschichtung andererseits auf. Aufgrund einer thermischen Aktivierung der Schmelzklebelackschicht bei gestapelten Blechteilen ergeben sich erhebliche thermische und mechanische Belastungen auf das Trennelement, was von einem Ausquetschen dieses oder Teile davon bis zu einem Versagen dessen Trennfunktion führen kann. Dies reduziert nicht nur die Reproduzierbarkeit des Verfahrens, sondern kann auch zu unerwünschten Verklebungen an der Vorrichtung führen, was deren Funktion beeinträchtigt.

Außerdem sind Trennelemente zur Trennung von gestapelten Blechteilen in Blechpakete aus EP3316457A1 und EP3089335A1 bekannt.

### Darstellung der Erfindung

Die Erfindung hat sich daher die Aufgabe gestellt, ein Verfahren zur Herstellung von Blechpaketen der eingangs geschilderten Art in der Reproduzierbarkeit zu verbessern.

Die Erfindung löst die gestellte Aufgabe durch die Merkmale des Anspruchs 1.

Indem die Klebstoffbeschichtung aus einem UV-vernetzten Haft-Schmelzklebstoff (HMPSA) auf Acrylatbasis besteht, kann sichergestellt werden, dass die Funktion des Trennelements im Stapel trotz eines vergleichsweise hohen Flächendrucks und einer vergleichsweise hohen Temperatur erhalten bleiben kann. Durch den UV-vernetzten Haft-Schmelzklebstoff muss nämlich ein Ausquetschen des Klebstoffs des Trennelements nicht befürchtet werden - was die geforderte Qualität an hergestellten Blechpaketen zuverlässig garantieren kann.

Die Gefahr eines Ausquetschens des Klebstoffs der Klebstoffbeschichtung auf dem Träger kann weiter vermindert werden, indem sie ein Flächengewicht im Bereich von 9 bis 13 g/m² aufweist. Dennoch kann dieses Flächengewicht für eine ausreichende Haftwirkung am Blechteil bzw. Blechpaket sorgen. Vorzugsweise weist diese Klebstoffbeschichtung ein Flächengewicht von 11 g/m² auf.

Vorstehendes kann weiter verbessert werden, wenn die Klebstoffbeschichtung auf dem Träger eine Schichtdicke im Bereich von 10 bis 17 µm aufweist. Vorzugsweise weist die Klebstoffbeschichtung auf dem Träger eine Schichtdicke im Bereich von 13 bis 16 µm auf.

Die mechanische Stabilität des Trennelements im Verfahren kann weiter verbessert werden, wenn ein Gewebe, ein Vlies oder eine Folie den Träger ausbildet. Vorzugsweise ist der Träger eine Polyesterfolie (PET-Folie).

Weist der Träger eine Trägerdicke im Bereich von 40 bis 60 µm auf, kann dies bereits für eine ausreichende mechanische Stabilität sorgen. Vorzugsweise weist der Folienträger eine Trägerdicke von 50 µm auf.

Die Trennung der Blechteile in Blechpakete im Verfahren kann weiter erleichtert werden, wenn das Trennelement auf der, der Trägerflachseite mit der Klebstoffbeschichtung gegenüberliegenden Trägerflachseite eine Antihaftbeschichtung aufweist.

Vorzugsweise ist diese Antihaftbeschichtung auf Silikonbasis, um eine rückstandsfreie Entfernung vom jeweiligen Blechteil bzw. Blechpaket zu ermöglichen.

Beispielsweise kann die Antihaftbeschichtung eine vernetzte, insbesondere lösungsmittelfreie, Silikonbeschichtung sein. Beispielsweise kann die Silikonbeschichtung thermisch vernetzt sein.

Für eine ausreichende Antihaft-Eigenschaft kann sich bereits eine Schichtdicke der Antihaftbeschichtung im Bereich von 1,0 bis 3,5 µm, insbesondere von 2,0 bis 3,0 µm, aufweisen.

Die Erfindung hat sich zudem die Aufgabe gestellt, die Standfestigkeit einer Vorrichtung zur Durchführung des erfindungsgemäßen Verfahrens zu verbessern.

Die Erfindung löst die gestellte Aufgabe durch die Merkmale des Anspruchs 7.

Indem die Klebstoffbeschichtung aus einem UV-vernetzten Haft-Schmelzklebstoff auf Acrylatbasis besteht, kann die Gefahr eines Verklebens der Stapeleinrichtung der Vorrichtung durch einen ausgequetschten Klebstoff des Trennelements reduziert bzw. gänzlich vermieden werden. Damit ist die Standfestigkeit der Vorrichtung weiter erhöhbar.

Auch wenn nicht wie in der beanspruchten Erfindung, hat sich zudem diese Offenbarung die Aufgabe gestellt, sicherzustellen, dass auch bei hohen Flächendrücken und Temperaturen auf ein Trennelement eine erleichterte Trennung von Blechpaketen erhalten bleibt.

Diese Trennung kann zuverlässiger erfolgen, indem ein Trennelement verwendet wird, welches einen flachen Träger mit einer Klebstoffbeschichtung, bestehend aus einem UV-vernetzten Haft-Schmelzklebstoff auf Acrylatbasis, auf einer Trägerflachseite aufweist, und das Trennelement mit Blechteilen gestapelt wird sowie diese Blechteile miteinander zu Blechpaketen durch stoffschlüssiges Fügen verbunden werden - und zwar trotz vergleichsweise hoher thermischen und physikalischen Belastungen auf das Trennelement.

Dies kann weiter verbessert werden, indem die Klebstoffbeschichtung auf dem Träger ein Flächengewicht im Bereich von 9 bis 13 g/m², insbesondere von 11 g/m², aufweist. Alternativ oder zusätzlich kann die Klebstoffbeschichtung eine Schichtdicke im Bereich von 10 bis 17 µm, insbesondere 13 bis 16 µm, aufweisen.

Auch kann bei dieser Verwendung die mechanische und/oder thermische Stabilität des Trennelements weiter erhöht werden, wenn ein Gewebe, ein Vlies oder eine Folie, insbesondere Polyesterfolie, den Träger ausbildet.

Weist bei dieser Verwendung der Träger eine Trägerdicke im Bereich von 40 bis 60 µm, insbesondere 50 µm, auf, erleichtert dies auch die Handhabbarkeit des Trennelements.

Dies umso mehr, wenn das Trennelement auf der, der Trägerflachseite mit der Klebstoffbeschichtung gegenüberliegenden Trägerflachseite eine Antihaftbeschichtung, insbesondere auf Silikonbasis, aufweist.

Beispielsweise wird als Antihaftbeschichtung eine vernetzte, insbesondere lösungsmittelfreie, Silikonbeschichtung verwendet. Beispielsweise kann die Silikonbeschichtung thermisch vernetzt sein.

Für eine ausreichende Antihaft-Eigenschaft kann sich bereits eine Schichtdicke der Antihaftbeschichtung im Bereich von 1,0 bis 3,5 µm, insbesondere von 2,0 bis 3,0 µm, aufweisen.

Insbesondere kann sich auszeichnen, wenn das Blechpaket ein Trennelement auf oder an einer dessen Stirnseite aufweist.

Dieses Trennelement kann auch eine elektrische Isolationsschicht ausbilden

### Kurze Beschreibung der Zeichnung

In den Figuren ist beispielsweise der Erfindungsgegenstand anhand einer Ausführungsvarianten näher dargestellt. Es zeigen
- Fig. 1: eine teilweise aufgerissene Seitenansicht auf eine Vorrichtung zur Durchführung eines Verfahrens zum Verbinden von Blechteilen zu Blechpaketen und
- Fig. 2: eine Schnittansicht durch ein Trennelement für gegenständliche Erfindung.

### Weg zur Ausführung der Erfindung

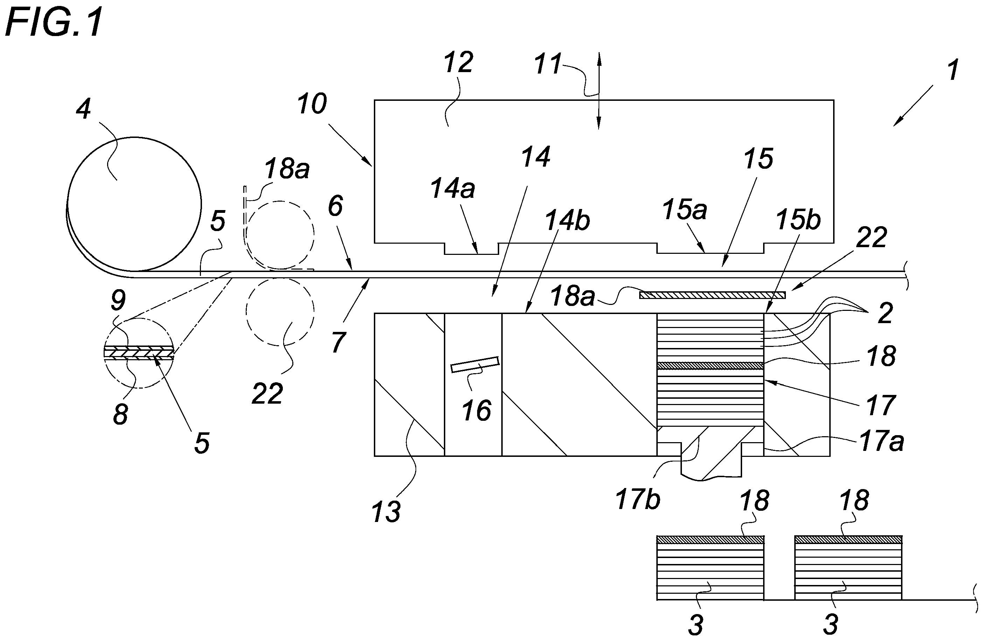

Gemäß dem Ausführungsbeispiel in Fig. 1 wird eine Vorrichtung 1 zur Durchführung des erfindungsgemäßen Verfahrens schematisch dargestellt. Diese Vorrichtung 1 dient dem Paketieren vereinzelter Blechteile 2 zu Blechpaketen 3. Hierzu wird von einem Coil 4 ein Elektroband 5 abgehaspelt, welches auf einer seiner Flachseiten 6 oder 7 oder -wie in Fig. 1 dargestellt- auf beiden seiner Flachseiten 6, 7 eine vollflächige, thermisch aktivierbare und damit aushärtbare, Schmelzklebelackschicht 8, 9 aufweist.

Im Allgemeinen wird erwähnt, dass solch eine thermisch aktivierbare bzw. heißhärtende Schmelzklebelackschicht 8, 9 bzw. Schmelzklebstoffschicht auch unter der Bezeichnung "Backlack" bekannt ist. Beispielsweise kann der Schmelzklebelack eine Epoxidharzbasis aufweisen. Vorzugsweise handelt es sich beim Schmelzklebelack um ein Bisphenol-basiertes Epoxidharz-System mit einem Härter, beispielsweise mit einer Dicyandiamidbasis. Insbesondere kann es sich beim erwähnten Schmelzklebelack um ein Bisphenol-A-Epichlorhydrinharz-System mit Dicyanamid als Härter handeln. Dieses zweistufig aushärtende Epoxidharz-System befindet sich auf dem Elektroband 5 im B-Zustand. Damit ist der teilvernetzte Schmelzklebelack noch reaktionsfähig. Durch Wärmezufuhr reagiert der sich im B-Zustand befindliche Schmelzklebelack weiter und kann damit in den vollvernetzten C-Zustand übergeführt werden - was auch als Verbacken bezeichnet wird. Typischerweise hat diese teilvernetzte Schmelzklebelackschicht 8, 9 eine Dicke von einigen Mikrometern.

Vom backlackbeschichteten Elektroband 5 werden mithilfe eines Stanzwerkzeugs 10, nach Fig. 1 mithilfe eines Folgestanzwerkzeugs bzw. Folgeverbundwerkzeugs, mehrere Blechteile 2 freigestanzt bzw. vereinzelt. Solch ein Freistanzen kann - im Allgemeinen erwähnt - ein Ausschneiden, Abschneiden, Ausklinken, Beschneiden, Zerteilen durch Ausdrücken etc. sein. Es ist aber auch ein Ausdrücken von Blechteilen 2 vorstellbar.

Wie außerdem der Fig. 1 zu entnehmen, führt das Stanzwerkzeug 10 ein Schneiden mit mehren Hüben 11 durch, indem sein Oberwerkzeug 12 mit seinem Unterwerkzeug 13 zusammenwirkt. Hierzu weist das Stanzwerkzeug 10 mehrere Stanzstufen 14, 15 auf.

Mit einer Stempel 14a der Vorbearbeitungsstanzstufe 14 am Oberwerkzeug 11 wird das Elektroband 5 für ein Freistanzen vorbearbeitet, wonach mit einem zweiten Stempel 15a der zweiten und auch letzten Stanzstufe 15 am Oberwerkzeug 11 aus dem Elektroband 5 Blechteile 2 freigestanzt bzw. damit vereinzelt werden. Hierzu wirken die Stempel 14a, 15a mit den jeweiligen Matrizen 14b, 15b der Stanzstufen 14, 15 am Unterwerkzeug 13 zusammen. Solch ein Folgeschneiden ist in der Fig. 1 unter anderem daran zu erkennen, dass beim Vorbearbeitungsstanzen ein Teil 16 vom Elektroband 5 abgetrennt wird, um das Elektroband 5 für das Freistanzen des Blechteils 2 vorzubereiten.

Jene, mithilfe der Stanzstufe 15 freigestanzten Blechteile 2 werden durch Druck des Oberwerkzeugs 11 bzw. des Stempels 15a in eine Stapeleinrichtung 17 gedrängt und dort gestapelt. Die Stapeleinrichtung 17 umfasst hierzu einen Schacht 17a und einen Gegenhalter 17b im Unterwerkzeug 13. Dieser Gegenhalter 17b im Unterwerkzeug 13 bremst die Blechteile 2, wodurch diese Blechteile 2 unter Druck des Oberwerkzeugs 11 und mithilfe der zwischen den Blechteilen 2 vorhandenen Klebstoffschicht 8, 9 eine physikalische und/oder chemische Verbindung eingehen bzw. damit gefügt werden - und zwar unter thermischer Aktivierung der Schmelzklebstoffschichten 8, 9 zwischen den Blechteilen 2. Hierzu wird die Stapeleinrichtung 17 aktiv beheizt. Außerdem können die Blechpakete 3 nicht dargestellten weiteren Aushärtungsschritten unterworfen werden, um die stoffschlüssige Verbindung zwischen den Blechteilen 2 weiter auszuhärten. Des Weiteren besteht die Möglichkeit einer Drehung der Stapeleinrichtung 17, um beispielsweise segmentierte Blechpakete 3 aus Lagen mit mehreren nebeneinander angeordneten und übereinander gestapelten Blechteilen 2 auszubilden - was ebenfalls nicht dargestellt ist.

Um die, die Stapeleinrichtung 17 verlassenden Blechpakete 3 leichter voneinander trennen zu können, wird mit den Blechteilen 2 mindestens ein Trennelement 18 mitgestapelt. Hierzu ist das Trennelement 18 ausgebildet, die Adhäsion mit der Klebstoffschicht 8, 9 zumindest eines daran anschließenden Blechteils 2 zu reduzieren. Dies schafft eine verminderte Haftfestigkeit zwischen den Blechteilen 2 der angrenzenden Blechpakete 3, was die Trennung der verbundenen Blechteile 2 in Blechpakete 3 erleichtert, wenn diese die Stapeleinrichtung 17 verlassen - wie in Fig. 1 zu erkennen.

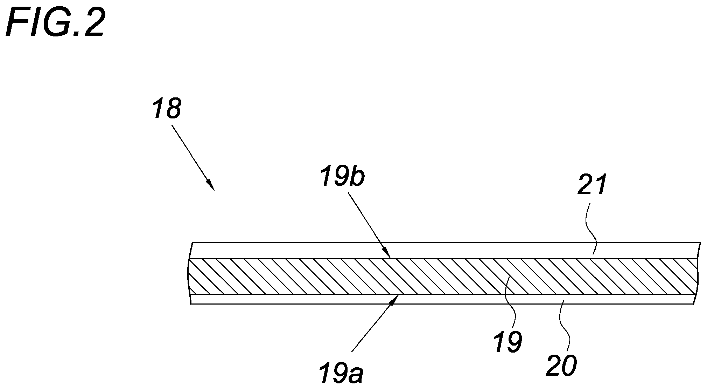

Jenes in Fig. 2 in vergrößerte Ansicht dargestellte Trennelement 18 weist einen flachen Träger 19 bzw. ein flaches Substrat auf. Direkt auf dem Träger 19, nämlich auf einer ersten Trägerflachseite 19a seiner beiden Trägerseiten 19a, 19b ist eine Klebstoffbeschichtung 20 vorgesehen.

Erfindungsgemäß besteht die Klebstoffbeschichtung 20 aus einem UV-vernetzten (UV-C) Haft-Schmelzklebstoff (HMPSA) auf Acrylatbasis. Damit kann den vergleichsweise hohen Drücken und Temperaturen beim Verbacken bzw. Fügen der Blechteile 2 zu Blechpaketen 3 in der Stapeleinrichtung 17 standgehalten werden. Ein Ausquetschen des Klebstoffs 3 der Klebstoffbeschichtung 20 muss daher nicht befürchtet werden, was sowohl die Innenwand der Stapeleinrichtung 17 als auch die dieser Stapeleinrichtung 17 verlassenden Blechpakete 3 frei von Verunreinigung hält. Das erfindungsgemäße Verfahren zum Verbinden von Blechteilen 2 zu Blechpaketen 3 kann daher besonders reproduzierbar die geforderte Formgenauigkeit der Blechpakete 3 erfüllen. Zudem ist eine Beeinträchtigung der Standfestigkeit der Vorrichtung durch Verklebungen in der Stapeleinrichtung 17 nicht zu befürchten.

Insbesondere zeichnet sich hierzu ein Trennelement 18 aus, das als Träger 19 eine Polyesterfolie mit einer Trägerdicke von 49,5 µm (gerundet also 50 µm) aufweist, um hohen Temperaturen und Drücken in der Stapeleinrichtung 17 standzuhalten.

Die Klebstoffbeschichtung 20 weist im Ausführungsbeispiel ein Flächengewicht von 11 g/m2 und eine erste Schichtdicke von 14,6 µm auf - und kann so für eine ausreichende Haftung an einem Blechpaket 3 sorgen. Ein unabsichtliches Lösen des Trennelements 18 im Verfahren ist damit vermeidbar, was die Reproduzierbarkeit weiter erhöhen kann.

Das Trennelement 18 reduziert die Adhäsion mit einem daran anschließenden Blechteil 2 eines anderen Blechpakets 3 dadurch, dass auf der, der Trägerflachseite 19a mit der Klebstoffbeschichtung 20 gegenüberliegenden Trägerflachseite 19b eine Antihaftbeschichtung 21 mit einer Silikonbasis vorgesehen ist. Diese Antihaftbeschichtung ist im Ausführungsbeispiel eine thermisch vernetzte Silikonbeschichtung, die vorzugsweise lösungsmittelfrei auf der Trägerflachseite 19b appliziert worden ist. Die Silikonbeschichtung weist hierfür eine zweite Schichtdicke im Bereich von 2,4 bis 2,9 µm auf.

Damit bleibt das Trennelement 18 auf einem Blechpaket 3 haften, wohingegen das Trennelement 18 vom anderen Blechpaket 3 leichter getrennt werden kann, was die Trennung der gestapelten Blechteile 2 in Blechpakete 3 erleichtert.

Wie zudem in Fig. 1 erkennbar, weist die Vorrichtung 1 auch eine Einrichtung 22 auf, mit der das Trennelement 18 zwischen zwei Blechteilen 2 vorgesehen wird. Dies, indem diese Einrichtung 22 das Trennelement 18 als Band oder Blatt 18a der zweiten Stanzstufe 15 unterhalb des Elektrobands 5 zuführt. Die zweite Stanzstufe 15 stanzt das Blechteil 2 mitsamt dem Trennelement 18 aus - und bringt dieses damit auch in eine, der Matrize 15.2 entsprechende Form. Zudem kann damit das Trennelement 18 mit den Blechteilen 2 mitgestapelt werden. Je nach Bedarf wird das Band oder Blatt der Stanzstufe 15 zugeführt, um so ein Trennelement 18 der Stapeleinrichtung 17 vorzusehen.

Es ist aber auch vorstellbar, dass das Trennelement 18 vor dem Stanzwerkzeug 10 bzw. Folgestanzwerkzeug auf das Elektroband aufgebracht wird, was in Fig. 1 strichliert dargestellt worden ist.

Im Allgemeinen wird festgehalten, dass "insbesondere" als "more particularly" ins Englische übersetzt werden kann. Ein Merkmal, dem "insbesondere" vorangestellt ist, ist als fakultatives Merkmal zu betrachten, das weggelassen werden kann, und stellt damit keine Einschränkung, beispielsweise der Ansprüche, dar. Das Gleiche gilt für "vorzugsweise", ins Englische übersetzt als "preferably".

## Patentansprüche

1. Verfahren zum Verbinden von Blechteilen (2) zu Blechpaketen (3), bei dem Blechteile (2) von einem Elektroband (5), das an zumindest einer Flachseite (6, 7) eine thermisch aktivierbare Schmelzklebelackschicht (8, 9) aufweist, vereinzelt, insbesondere abgetrennt, werden,
und die vereinzelten Blechteile (2) gestapelt und zu mehreren Blechpaketen (3) durch thermische Aktivierung der Schmelzklebelackschicht (8, 9) stoffschlüssig miteinander verbunden werden,
wobei beim Stapeln der Blechteile (2) zumindest ein Trennelement (18) zwischen zwei Blechteilen (2) mitgestapelt wird, um damit die Trennung der gestapelten Blechteile (2) in Blechpakete (3) voneinander zu erleichtern, wobei das Trennelement (18) einen flachen Träger (19) und eine Klebstoffbeschichtung (20) auf einer Trägerflachseite (19a) des Trägers (19) aufweist,
**dadurch gekennzeichnet, dass**
die Klebstoffbeschichtung (20) aus einem UV-vernetzten Haft-Schmelzklebstoff (HMPSA) auf Acrylatbasis besteht.

2. Verfahren nach Anspruch 1, **dadurch gekennzeichnet, dass** die Klebstoffbeschichtung (20) auf dem Träger (19) ein Flächengewicht im Bereich von 9 bis 13 g/m², insbesondere von 11 g/m², und/oder eine Schichtdicke im Bereich von 10 bis 17 µm, insbesondere 13 bis 16 µm, aufweist.

3. Verfahren nach einem der Ansprüche 1 bis 2, **dadurch gekennzeichnet, dass** ein Gewebe, ein Vlies oder eine Folie, insbesondere Polyesterfolie, den Träger (19) ausbildet.

4. Verfahren nach einem der Ansprüche 1 bis 3, **dadurch gekennzeichnet, dass** der Träger (19) eine Trägerdicke im Bereich von 40 bis 60 µm, insbesondere 50 µm, aufweist.

5. Verfahren nach einem der Ansprüche 1 bis 4, **dadurch gekennzeichnet, dass** das Trennelement (18) auf der, der Trägerflachseite (19a) mit der Klebstoffbeschichtung (20) gegenüberliegenden Trägerflachseite (19b) eine Antihaftbeschichtung (21), insbesondere auf Silikonbasis, aufweist.

6. Verfahren nach Anspruch 5, **dadurch gekennzeichnet, dass** die Antihaftbeschichtung (21) eine vernetzte, insbesondere lösungsmittelfreie, Silikonbeschichtung ist und/oder eine Schichtdicke im Bereich von 1,0 bis 3,5 µm, insbesondere von 2,0 bis 3,0 µm, aufweist.

7. Vorrichtung zur Durchführung des Verfahrens nach einem der Ansprüche 1 bis 6, mit einem Stanzwerkzeug (10), das eine Stanzstufe (15) mit einem Stempel (15a) zum Vereinzeln von Blechteilen (2) von einem, an zumindest einer seiner Flachseiten (6, 7) mit einer thermisch aktivierbaren Schmelzklebelackschicht (8, 9) beschichteten Elektroband (5) aufweist, mit einer Stapeleinrichtung (17) zum Stapeln der vereinzelten Blechteile (2) zu mehreren Blechpaketen (3), und mit einer Einrichtung (22), die ein Trennelement (18) aufweist und ausgebildet ist, dieses Trennelement (18) auf dem Elektroband (5) und/oder zwischen zwei Blechteilen (2) vorzusehen, um damit die Trennung der gestapelten Blechteile (2) in Blechpakete (3) zu erleichtern, wobei das Trennelement (18) einen flachen Träger (19) mit einer Klebstoffbeschichtung (20) auf einer seiner Trägerflachseiten (19a) aufweist, **dadurch gekennzeichnet, dass** die Klebstoffbeschichtung (20) aus einem UV-vernetzten Haft-Schmelzklebstoff (HMPSA) auf Acrylatbasis besteht.

8. Blechpaket, hergestellt durch das Verfahren nach einem der Ansprüche 1 bis 6, mit einem Trennelement (18) auf einer Stirnseite des Blechpakets (3).

9. Blechpaket nach Anspruch 8, **dadurch gekennzeichnet, dass** das Trennelement (18) eine elektrische Isolationsschicht ausbildet.

## Claims

1. A method for connecting sheet metal parts (2) to form lamination stacks (3) in which
sheet metal parts (2) are separated, more particularly detached, from an electrical strip (5), which has a thermally activatable hot-melt adhesive varnish layer (8, 9) on at least one flat side (6, 7),
and the detached sheet metal parts (2) are stacked and, by means of thermal activation of the hot-melt adhesive varnish layer (8, 9), are integrally joined to one another to form a plurality of lamination stacks (3),
wherein when the sheet metal parts (2) are stacked, at least one dividing element (18) is added to the stack between two sheet metal parts (2) in order to make it easier to divide the stacked sheet metal parts (2) from one another to form lamination stacks (3), wherein the dividing element (18) has a flat support (19) and an adhesive coating (20) on one flat side (19a) of the support (19),
**characterized in that**
the adhesive coating (20) consists of a UV-cross-linked acrylic-based hot-melt pressure-sensitive adhesive (HMPSA).

2. The method according to claim 1, **characterized in that** the adhesive coating (20) on the support (19) has a weight per unit area in the range from 9 to 13 g/m², more particularly 11 g/m², and/or a layer thickness in the range from 10 to 17 µm, more particularly 13 to 16 µm.

3. The method according to one of claims 1 to 2, **characterized in that** the support (19) is composed of a woven, a nonwoven, or a film, more particularly a polyester film.

4. The method according to one of claims 1 to 3, **characterized in that** the support (19) has a support thickness in the range from 40 to 60 µm, more particularly 50 µm.

5. The method according to one of claims 1 to 4, **characterized in that** the dividing element (18) has a nonstick coating (21), more particularly a silicone-based nonstick coating, on the flat side of the support (19b) opposite from the flat side of the support (19a) with the adhesive coating (20).

6. The method according to claim 5, **characterized in that** the nonstick coating (21) is a cross-linked, more particularly solvent-free, silicone coating and/or has a layer thickness in the range from 1.0 to 3.5 µm, more particularly from 2.0 to 3.0 µm.

7. A device for carrying out the method according to one of claims 1 to 6, with a stamping tool (10), which has a stamping stage (15) with a punch (15a) for separating sheet metal parts (2) from an electrical strip (5) that is coated with a thermally activatable hot-melt adhesive varnish layer (8, 9) on at least one of its flat sides (6, 7), with a stacking unit (17) for stacking the separated sheet metal parts (2) to form a plurality of lamination stacks (3), and with a unit (22), which has a dividing element (18) and is embodied to place this dividing element (18) on the electrical strip (5) and/or between two sheet metal parts (2) in order to thus make it easier to divide the stacked sheet metal parts (2) into lamination stacks (3), wherein the dividing element (18) has a flat support (19) with an adhesive coating (20) on one of its flat sides (19a), **characterized in that** the adhesive coating (20) consists of a UV-cross-linked acrylic-based hot-melt pressure-sensitive adhesive (HMPSA).

8. A lamination stack produced by means of the method according to one of claims 1 to 6, with a dividing element (18) at one end of the lamination stack (3).

9. The lamination stack according to claim 8, **characterized in that** the dividing element (18) forms an electrical insulation layer.

## Revendications

1. Procédé destiné à lier des tôles (2) pour former des empilages de tôles (3), dans lequel
des tôles (2) sont isolées, plus particulièrement séparées, à partir d'une bande électrique (5), laquelle présente sur au moins une face plane (6, 7) une couche de vernis adhésif fusible thermiquement activable (8, 9),
et les tôles isolées (2) sont empilées et liées les unes aux autres par liaison de matière pour former plusieurs empilages de tôles (3) par le biais de l'activation thermique de la couche de vernis adhésif fusible (8, 9),
dans lequel lors de l'empilement des tôles (2) au moins un élément de séparation (18) est intercalé entre deux tôles (2) pour ainsi faciliter la séparation des tôles empilées (2) en empilages de tôles (3) distincts, dans lequel l'élément de séparation (18) présente un support plan (19) et un revêtement adhésif (20) sur une face plane de support (19a) du support (19),
**caractérisé en ce que**
le revêtement adhésif (20) est composé d'un adhésif thermofusible sensible à la pression (HMPSA) réticulé aux UV sur une base d'acrylate.

2. Procédé selon la revendication 1, **caractérisé en ce que** le revêtement adhésif (20) présente sur le support (19) un poids superficiel dans la plage de 9 à 13 g/m², plus particulièrement de 11 g/m², et/ou une épaisseur de couche dans la plage de 10 à 17 µm, plus particulièrement 13 à 16 µm.

3. Procédé selon l'une des revendications 1 à 2, **caractérisé en ce qu'**un tissu, un non-tissé ou un film, plus particulièrement un film en polyester, forme le support (19).

4. Procédé selon l'une des revendications 1 à 3, **caractérisé en ce que** le support (19) présente une épaisseur de support dans la plage de 40 à 60 µm, plus particulièrement 50 µm.

5. Procédé selon l'une des revendications 1 à 4, **caractérisé en ce que** l'élément de séparation (18) présente sur la face plane de support (19b), opposée à la face plane de support (19a) avec le revêtement adhésif (20), un revêtement antiadhésif (21), plus particulièrement à base de silicone.

6. Procédé selon la revendication 5, **caractérisé en ce que** le revêtement antiadhésif (21) est un revêtement en silicone réticulé, plus particulièrement sans solvant, et/ou présente une épaisseur de couche dans la plage de 1,0 à 3,5 µm, plus particulièrement de 2,0 à 3,0 µm.

7. Dispositif destiné à mettre en œuvre le procédé selon l'une des revendications 1 à 6, comprenant un outil de poinçonnage (10), qui présente une station de poinçonnage (15) avec un poinçon (15a) afin d'isoler des tôles (2) à partir d'une bande électrique (5) revêtue sur au moins une de ses faces planes (6, 7) d'une couche de vernis adhésif fusible thermiquement activable (8, 9), un moyen d'empilage (17), afin d'empiler les tôles isolées (2) pour former plusieurs empilages de tôles (3), et un moyen (22) qui présente un élément de séparation (18) et est conçu pour prévoir cet élément de séparation (18) sur la bande électrique (5) et/ou entre deux tôles (2) afin de faciliter ainsi la séparation des tôles empilées (2) en empilages de tôles (3), dans lequel l'élément de séparation (18) présente un support plan (19) avec un revêtement adhésif (20) sur une de ses faces planes de support (19a), **caractérisé en ce que** le revêtement adhésif (20) est composé d'un adhésif thermofusible sensible à la pression (HMPSA) réticulé aux UV sur une base d'acrylate.

8. Empilage de tôles, fabriqué par le procédé selon l'une des revendications 1 à 6, comprenant un élément de séparation (18) sur une face frontale de l'empilage de tôles (3).

9. Empilage de tôles selon la revendication 8, **caractérisé en ce que** l'élément de séparation (18) forme une couche d'isolation électrique.
